# EUROPÄISCHE PATENTSCHRIFT

(11) **EP 1 706 341 B1**
(45) Veröffentlichungstag und Bekanntmachung des Hinweises auf die Patenterteilung: **02.05.2007**
(21) Anmeldenummer: 05701059.7
(22) Anmeldetag: 20.01.2005
(51) Int. Cl.: B65G 47/91, B65B 35/30, B66C 1/00

(54) **TUBEN-HANDHABUNGSVORRICHTUNG**
TUBULAR HANDHELD DEVICE
DISPOSITIF DE MANIPULATION DE TUBES

(30) Priorität: 22.01.2004 DE 102004003188
(43) Veröffentlichungstag der Anmeldung: 04.10.2006
(73) Patentinhaber: IWK Verpackungstechnik GmbH, 76297 Stutensee (DE)
(72) Erfinder: BEHRINGER, Thomas, 76467 Bietigheim (DE)
(74) Vertreter: Lasch, Hartmut
(86) Internationale Anmeldenummer: PCT/EP2005/000510
(87) Internationale Veröffentlichungsnummer: WO 2005/070795

(56) Entgegenhaltungen:
- WO-A-00/64749
- CH-A- 399 987
- US-A- 3 860 280
- US-B1- 6 439 631

## Beschreibung

Die Erfindung betrifft eine Tuben-Handhabungsvorrichtung zum Einsetzen von Tuben in eine Tubenfüllmaschine, zum Umsetzen von Tuben innerhalb der Tubenfüllmaschine und/oder zum Entnehmen von Tuben aus der Tubenfüllmaschine gemäß dem Oberbegriff des Anspruchs 1.

In einer Tubenfüllmaschine kann es in verschiedenen Situationen notwendig sein, die Tuben zu ergreifen und zwischen verschiedenen Stationen oder Maschinenabschnitten umzusetzen. Die leeren, unverschlossenen Tuben werden üblicherweise nahe der Tubenfüllmaschine in enger Packung als Vorrat beispielsweise in entsprechenden Behältern bereitgestellt und müssen in Tubenhalter eingesetzt werden, in denen sie die verschiedenen Stationen der Tubenfüllmaschine laufen. Nach dem Befüllen und Verschließen der Tuben müssen diese aus den Tubenhaltern entnommen und entweder einer nachfolgenden Verpackungsmaschine zugeführt oder in enger Packung direkt in einen Ständer oder Karton eingesetzt werden.

Im Folgenden soll beispielhaft das Einsetzen der leeren, unverschlossenen Tuben in die Tubenhalter erläutert werden, jedoch sind andere Handhabungs- und Umsetzvorgänge der Tuben in der Tubenfüllmaschine durch die Erfindung in gleicher Weise mit erfasst.

Aus der WO 00/64749 A1 ist eine Tuben-Handhabungsvorrichtung bekannt, die einen Industrieroboter aufweist, an dessen Arm ein Träger mit einer Vielzahl von Tubengreifern angebracht ist. Die Tubengreifer sind in zumindest einer Greiferreihe angeordnet, die üblicherweise 10 bis 15 Tubengreifer umfasst. Zum Aufnehmen von Tuben aus dem Vorrat und zum Einsetzen in die Tubenhalter der Tubenfüllmaschine wird der Roboter-Arm so verfahren, dass der Träger mit den Tubengreifern oberhalb der vertikal ausgerichteten, nach oben offenen Tuben angeordnet ist. Die Tubengreifer fahren dann von oben in jeweils eine leere Tube ein und ergreifen diese. Dies kann allein infolge Reibung oder auch mittels entsprechend verstellbarer Greiferelemente erfolgen.

Durch Verfahren des Roboter-Arms werden die Tuben dann aus dem Vorrat entnommen und in eine Position an dem entsprechenden Tubenhalter der Tubenfüllmaschine gebracht. Der Roboter-Arm führt die Tuben in die Tubenhalter ein und gibt sie anschließend frei, so dass die Tuben in den Tubenhaltern mehrere Stationen der Tubenfüllmaschine, beispielsweise eine Füllstation und eine Verschlussstation, durchlaufen können.

In dem Vorrat sind die Tuben üblicherweise in enger Packung angeordnet. Die Tubenhalter weisen hingegen einen gegenseitigen Abstand auf. Dies hat zur Folge, dass der gegenseitige Abstand der Tubengreifer während des Umsetzvorganges verändert werden muss. Zum Aufnehmen der leeren Tuben aus dem Vorrat müssen die Tubengreifer einen ersten, relativ geringen gegenseitigen Abstand aufweisen, wohingegen die Tubengreifer beim Einsetzen der Tuben in die Tubenhalter einen zweiten gegenseitigen Abstand aufweisen müssen, der größer als der erste gegenseitige Abstand ist, d.h. die Tubengreifer und somit die Tuben müssen in Längsrichtung der Greiferreihe auseinandergezogen werden.

Zur Veränderung des gegenseitigen Abstandes der Tubengreifer ist es bekannt, die Tubengreifer über ein flexibles Band miteinander zu verbinden und am ersten und letzten Tubengreifer der Greiferreihe jeweils eine Antriebsvorrichtung in Form eines Pneumatikzylinders angreifen zu lassen. Wenn der erste und der letzte Tubengreifer mittels der Pneumatik-Zylinder in entgegengesetzte Richtungen bewegt werden, wird diese Bewegung über das Band auch auf die inneren Tubengreifer der Greiferreihe übertragen und diese werden nacheinander in Bewegung gesetzt. In der Endposition ist das Band gespannt und die Tubengreifer befinden sich in einer auseinandergezogenen Position, in der sie einen gegenseitigen Abstand aufweisen, der dem gegenseitigen Abstand der Tubenhalter entspricht.

Um die Tubengreifer aus ihrer auseinandergezogenen Position wieder in die zusammengeschobene Position zu bringen, werden der erste und der letzte Tubengreifer der Greiferreihe mit den Pneumatik-Zylindern aufeinander zu bewegt. Da das die Tubengreifer verbindende Band keine Druckkräfte übertragen kann, kommen die beiden äußeren Tubengreifer zunächst mit den benachbarten Tubengreifern in Kontakt und verschieben diese aufeinander zu, bis diese mit den ihnen benachbarten, innenliegenden Tubengreifern in Kontakt kommen und diese ebenfalls verschieben. Diese Bewegung wird solange fortgeführt, bis alle Tubengreifer der Greiferreihe vollständig zusammengeschoben sind und eine gegebenenfalls durch Abstandselemente definierte zusammengeschobene Position einnehmen, in der sie einen gegenseitigen Abstand aufweisen, der dem gegenseitigen Abstand der Tuben im Vorrat entspricht.

Nachteilig bei der bekannten Konstruktion ist insbesondere, dass die Tubenhalter nur in der auseinandergezogenen Position und in der zusammengeschobenen Position einen konstanten gegenseitigen Abstand aufweisen, während in allen Zwischenpositionen unterschiedliche Abstände zwischen den Tubengreifern auftreten. Auf diese Weise sind die Tubengreifer an ein bestimmtes Tubenformat, eine spezielle Anordnung der Tuben im Vorrat und auch an den gegenseitigen Abstand der Tubenhalter der Tubenfüllmaschine angepasst. Für die Umstellung beispielsweise auf eine andere Tubengröße oder eine andere Anordnung der Tuben im Vorrat müssen die Tubengreifer mit dem Band ausgebaut und mittels eines anderen Bandes an die geänderte Geometrie angepasst werden. Dieses Vorgehen ist mühsam, zeitaufwendig und kostenintensiv.

Darüber hinaus hat es sich gezeigt, dass das Band einem relativ großen Verschleiß unterliegt und in bestimmten zeitlichen Abständen ausgewechselt werde muss, wobei die Tubenfüllmaschine in dieser Zeit stillsteht, was unwirtschaftlich ist. Des Weiteren kann sich nach langer Betriebsdauer eine lokale Deformation oder Längung des Bandes ergeben, wodurch die gewünschten relativen Positionen der Tubengreifer nicht mit der erforderlichen hohen Genauigkeit erreicht werden.

Aus der CH 399 987 ist eine Tubenfüllmaschine bekannt, bei der ebenfalls der gegenseitige Abstand der Tuben verändert wird. Die Tubenfüllmaschine besitzt jedoch keine Tubengreifer, sondern mehrere in einer Reihe angeordnete rohrförmige Tubenhalter, in die jeweils eine Tube mit Spiel eingesetzt wird, wobei die Tube durch eine unterseitige Platte an einem Herausfallen aus den Tubenhaltern gehindert ist. Der gegenseitige Abstand der Tubenhalter wird mittels eines Scheren-Gestänges verstellt, das von einem Kolben über eine Gabel auseinandergezogen und zusammengeschoben wird. Mit einer derartigen Ausgestaltung ist der Nachteil verbunden, dass der als Antriebsvorrichtung wirkende Kolben einen großen Hubweg ausführen muss, um das Scheren-Gestänge vollständig auseinander zu ziehen bzw. zusammen zu schieben. Auf diese Weise dauert die Verstellung des Scheren-Gestänges relativ lange und vermindert somit die Leistungsfähigkeit der Tubenfüllmaschine. Darüber hinaus kann es insbesondere nach längerer Betriebsdauer zu einer verringerten Positioniergenauigkeit kommen, da der Kolben auf das Scheren-Gestänge eine außermittige Antriebskraft ausübt, die zu ungleichmäßigen Belastungen und inneren Spannungen führt.

Der Erfindung liegt die Aufgabe zugrunde, eine Tuben-Handhabungsvorrichtung der genannten Art zu schaffen, die eine schnelle, exakte Verstellung der Tubengreifer ermöglicht und die auch über eine lange Betriebsdauer eine hohe Positioniergenauigkeit gewährleistet.

Diese Aufgabe wird erfindungsgemäß mit einer Tuben-Handhabungsvorrichtung mit den kennzeichnenden Merkmalen des Anspruchs 1 gelöst. Dabei ist vorgesehen, dass die Übertragungsvorrichtung von einem Scheren-Gestänge gebildet ist, das mittels der Antriebsvorrichtung auseinanderziehbar und zusammenschiebbar ist, und dass die Antriebsvorrichtung von zwei Pneumatik-Zylindern gebildet ist, die in Längsrichtung der Greiferreihe parallel zueinander ausgerichtet und in entgegengesetzten Richtungen wirksam sind.

Bei einem Scheren-Gestänge handelt es sich um ein an sich bekanntes Konstruktionselement, das aus einer Vielzahl von gelenkig miteinander verbundenen, insbesondere stabförmigen Gestängeteilen aufgebaut ist. Jeweils zwei stabförmige Gestängeteile sind kreuzweise, d.h. in X-Konfiguration angeordnet und an ihrem Kreuzungspunkt gelenkig miteinander verbunden und bilden ein sogenanntes X-Teil. Zur Bildung des Scherengestänges sind mehrere X-Teile in einer Reihe nebeneinander angeordnet, wobei die freien Enden der stabförmigen Gestängeteile jeweils gelenkig mit den zugeordneten freien Enden des benachbarten X-Teils verbunden ist.

Wenn auf ein derartiges Scheren-Gestänge eine axiale Druck- bzw. Normalkraft ausgeübt wird, verkürzt sich das Scheren-Gestänge, indem alle X-Teile in gleicher Weise um das Gelenk an ihrem Kreuzungspunkt schwenken. Unabhängig davon, an welcher Stelle die Druckkraft in das Scheren-Gestänge eingeleitet wird, erfahren die X-Teile des Scheren-Gestänges jeweils die gleiche geometrische Veränderung. Entsprechendes gilt selbstverständlich bei Einbringung einer Zugkraft in das Scherengestänge.

Bei der erfindungsgemäßen Tuben-Handhabungsvorrichtung sind die Tubengreifer an den X-Teilen des Scheren-Gestänges angebracht. Dabei ist insbesondere vorgesehen, dass das Scheren-Gestänge im Wesentlichen in Längsrichtung des Trägers verläuft und dass die Tubengreifer jeweils in einem unteren Gelenkpunkt des Scheren-Gestänges angeordnet sind, d.h. einem Punkt, an dem benachbarte X-Teile gelenkig miteinander verbunden sind.

Wenn das Scheren-Gestänge auseinandergezogen wird, ändert sich auch der gegenseitige Abstand der unteren Gelenkpunkte der X-Teile des Scheren-Gestänges und somit der Tubengreifer, wobei jedoch in jedem Zustand der Verstellbewegung der Abstand zwischen benachbarten Tubengreifern jeweils gleich ist. Um die Tuben-Handhabungsvorrichtung auf eine andere Tubengröße oder eine andere Anordnung der Tuben im Vorrat umzustellen, sind somit keine Umbauten notwendig, sondern die gewünschte Soll-Position muss lediglich in der Steuerung der Tuben-Handhabungsvorrichtung definiert und insbesondere eingespeichert werden.

Als Antriebsvorrichtung des Scheren-Gestänges finden zwei Pneumatik-Zylinder Verwendung, die an verschiedenen Punkten des Scheren-Gestänges angreifen. Die beiden Pneumatik-Zylinder sind in Längsrichtung der Greiferreihe parallel zueinander angeordnet und wirken in entgegengesetzte Richtungen. Im ausgefahrenen Zustand der Pneumatik-Zylinder liegen diese im wesentlichen nebeneinander. Dies führt zu einem sehr kompakten Aufbau der Tuben-Handhabungsvorrichtung, die somit einen nur geringen Bauraum erfordert.

Um das Scheren-Gestänge vollständig auseinander zu ziehen bzw. zusammen zu schieben, muss jeder Pneumatik-Zylinder lediglich den halben Verstellweg ausführen. Auf diese Weise ist die Verstellzeit halbiert, so dass sich für die Tubenfüllmaschine eine hohe Leistungsfähigkeit mit hohen Taktraten erzielen lässt.

Auf Grund der Verwendung von zwei Pneumatik-Zylindern als Antriebsvorrichtung ist ein Aufbau des Scheren-Gestänges mit im wesentlichen symmetrisch verteilten Massen bzw. einem im wesentlichen mittigen Massenschwerpunkt gegeben. Dies führt zu gleichmäßigen Verstellbewegungen, wodurch die Belastung des Scheren-Gestänges verringert ist. Da das Scheren-Gestänge somit keinem oder einem nur sehr geringen Verschleiß unterliegt, ist bei der erfindungsgemäßen Tuben-Handhabungsvorrichtung sichergestellt, dass die Tubengreifer mit hoher Genauigkeit auch über eine lange Gebrauchsdauer der Tuben-Handhabungsvorrichtung positioniert werden können. Dabei sind die Pneumatik-Zylinder vorzugsweise in ihren Bewegungen miteinander synchronisiert, um Zwängungsspannungen in dem Scheren-Gestänge zu vermeiden.

Zur Erzielung einer gleichmäßigen Verstellbewegung des Scheren-Gestänges hat es sich weiterhin als vorteilhaft erwiesen, wenn die Pneumatik-Zylinder jeweils etwa im 1/4-Punkt der Länge des Scheren-Gestänges angreifen. Wenn das Scheren-Gestänge beispielsweise aus 14 X-Teilen aufgebaut ist, sollten die Pneumatik-Zylinder einerseits im Bereich des dritten oder vierten X-Teils und andererseits im Bereich des elften oder zwölften X-Teils angreifen.

Die erfindungsgemäße Tuben-Handhabungsvorrichtung umfasst des Weiteren vorzugsweise einen Roboter, an dessen verstellbarem Schwenkarm der Träger angeordnet ist, wie es auch in der WO 00/64749 A1 gezeigt ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine Vorderansicht des Trägers der TubenHandhabungsvorrichtung mit den Tubengreifern und aufgenommenen Tuben,
- Figur 2: eine vergrößerte Darstellung der Übertragungsvorrichtung gemäß Fig. 1,
- Figur 3: eine ausschnittsweise perspektivische Rückansicht der Vorrichtung gemäß Fig. 1 und
- Figur 4: die Vorrichtung gemäß Fig. 1 in einem auseinandergezogenen Zustand der Tubengreifer.

Eine Tuben-Handhabungsvorrichtung 10 umfasst einen nicht im Einzelnen dargestellten Industrieroboter, der einen in üblicher Weise um eine Vielzahl von Achsen im Raum verstellbaren Roboter-Arm 12 aufweist, an dessen freiem Ende ein Querträger 13 angeordnet ist. Über eine Verstellvorrichtung 15 sind an dem Träger 13 eine Vielzahl von Tubengreifern 14 gelagert, die in einer sich in Längsrichtung des Trägers 13 erstreckenden Greiferreihe nebeneinander angeordnet sind. Die Verstellvorrichtung 15 umfasst zwei Pneumatik-Zylinder 16, 17, die parallel zueinander und in Längsrichtung des Trägers 13 ausgerichtet sind und in entgegengesetzte Richtungen wirksam sind, sowie eine Übertragungsvorrichtung 18 in Form eines Scheren-Gestänges 11, mittels dessen eine Bewegung der Pneumatik-Zylinder 16, 17 in eine Relativbewegung der Tubengreifer 14 längs der Greiferreihe umgesetzt werden kann.

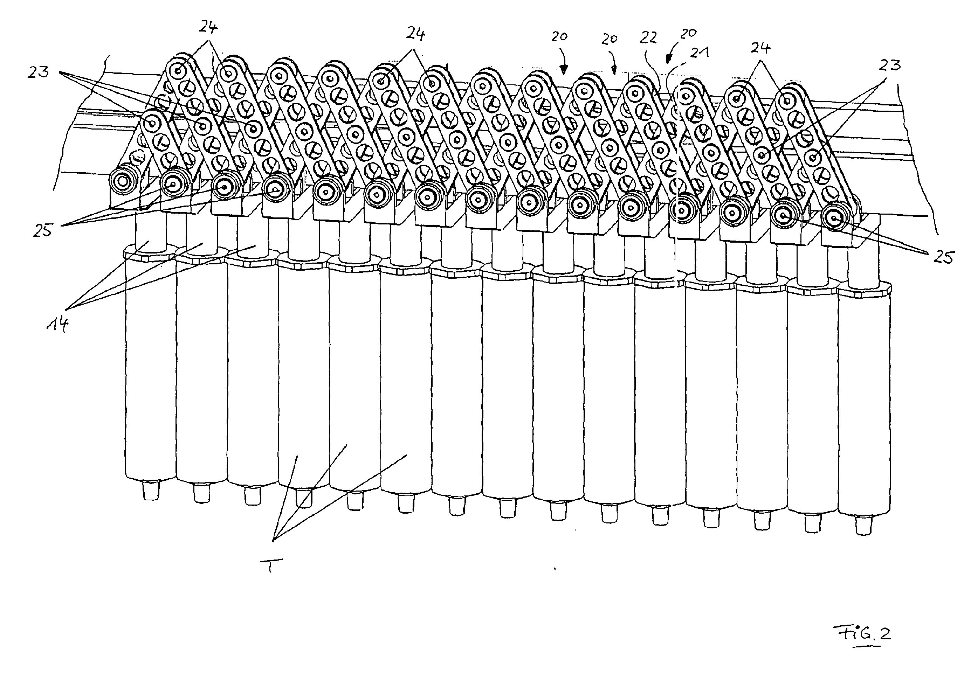

Wie insbesondere Fig. 2 zeigt, ist das Scheren-Gestänge 11 aus einer Vielzahl von gelenkig miteinander verbundenen, im Wesentlichen stabförmigen Gestängeteilen aufgebaut. Jeweils zwei Gestängeteile 21, 22 sind in einer X-Konfiguration angeordnet und an ihrem mittleren Kreuzungspunkt 23 gelenkig miteinander verbunden und bilden ein sogenanntes X-Teil 20. Das Scheren-Gestänge 11 ist aus mehreren, in Reihe nebeneinander angeordneten X-Teilen 20 aufgebaut, wobei die einander zugewandten freien Enden der jeweiligen stabförmigen Gestängeteile jeweils gelenkig mit den zugewandten freien Enden des jeweils benachbarten X-Teils 20 unter Bildung von oberen Gelenkpunkten 24 und unteren Gelenkpunkten 25 verbunden ist. An den unteren Gelenkpunkten 25 ist jeweils ein vertikal nach unten hervorstehender Tubengreifer 14 angebracht, der in eine offene Tube T eingeführt werden kann und diese dann aufnimmt oder ergreift.

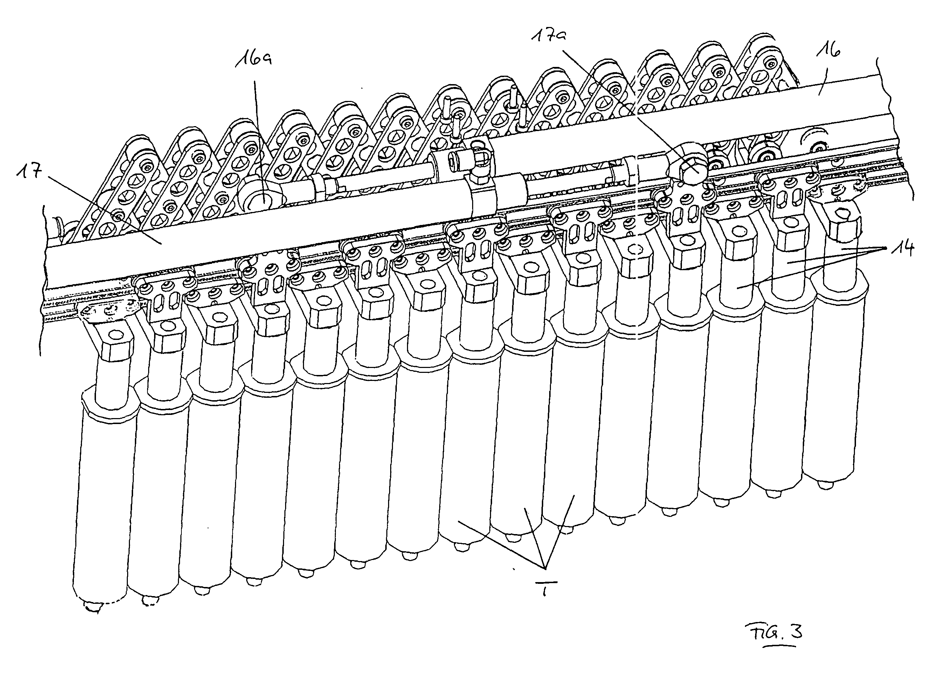

Wie insbesondere Fig. 3 zeigt, sind die Pneumatik-Zylinder 16, 17 an ihrem einen Ende an dem Träger 13 angebracht und am freien Ende ihres ausfahrbaren Kolbens 16a, 17a jeweils etwa im 1/4-Punkt der Länge des Scheren-Gestänges 11 an diesem angebracht. Wenn die Pneumatik-Zylinder 16, 17 ausgefahren werden, wird auf das Scheren-Gestänge 11 eine Zugkraft ausgeübt, wodurch die stabförmigen Gestängeteile 21, 22 jedes X-Teils 20 um ihren Kreuzungspunkt 23 relativ zueinander schwenken und das Scheren-Gestänge 11 insgesamt eine Längung erfährt, wodurch sich der gegenseitige Abstand benachbarter unterer Gelenkpunkte 25 und somit auch der gegenseitige Abstand benachbarter Tubengreifer 14 vergrößert.

Wenn hingegen die Pneumatik-Zylinder 16, 17 eingezogen werden, wird das Scheren-Gestänge 11 entsprechend zusammengeschoben, wodurch sich der gegenseitige Abstand der unteren Gelenkpunkte 25 der X-Teile 20 und somit auch der gegenseitige Abstand der Tubengreifer 14 verringert. Auf diese Weise ist es möglich, den gegenseitigen Abstand der Tubengreifer 14 durch entsprechende Ansteuerung der Pneumatik-Zylinder 16, 17 und/oder durch Definieren von entsprechenden Endpositionen zwischen verschiedenen Stellungen zu verstellen.

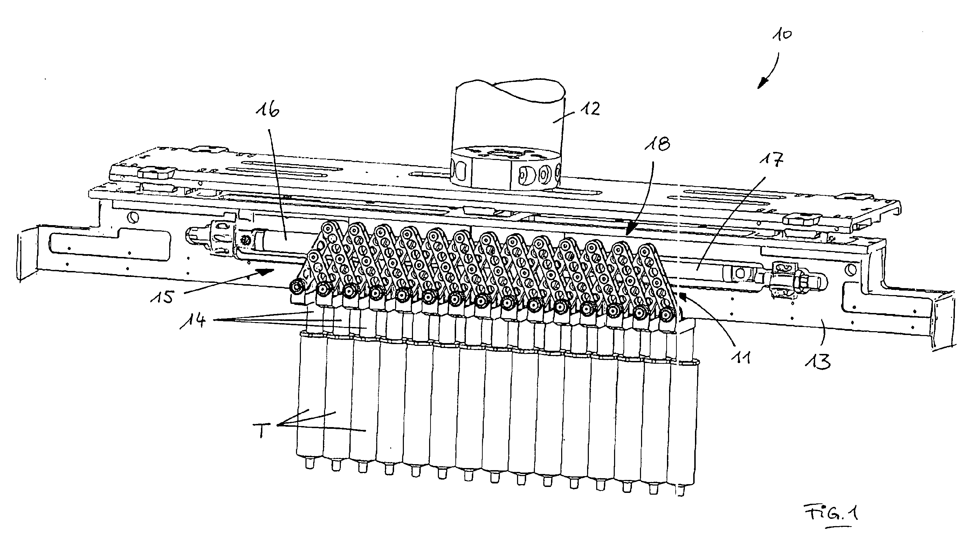

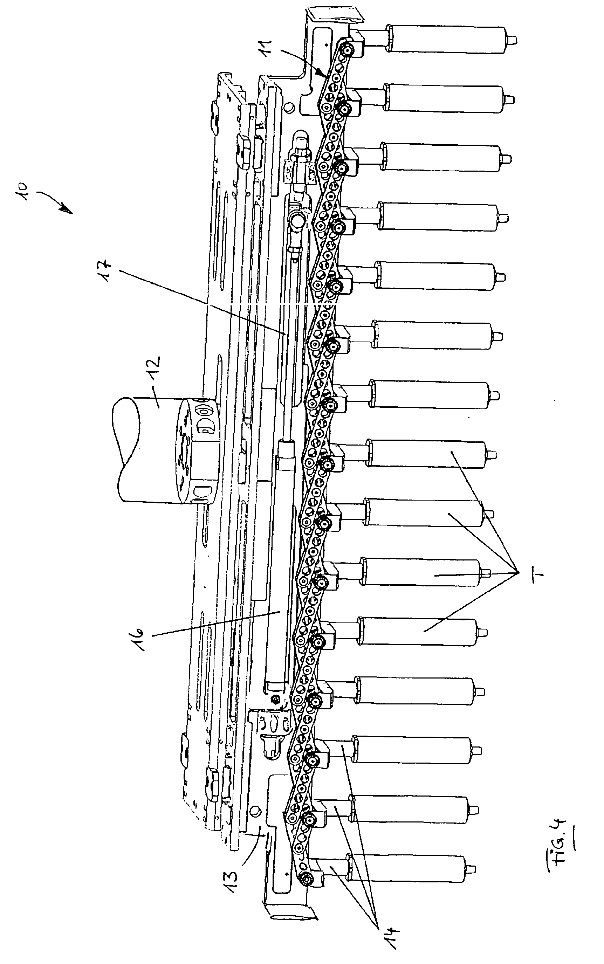

Die Fig. 1 bis 3 zeigen den zusammengeschobenen Zustand des Scheren-Gestänges 11, bei dem die Tubengreifer 14 so eng aneinanderstehen, dass sie in direkter Anlage stehende Tuben T aufnehmen können. In dieser Stellung werden die Tuben T aus einem Vorrat entnommen. Während der Bewegung, mit der die Tuben T zum Einsetzen in Tubenhalter der Tubenfüllmaschine überführt werden, werden die Pneumatikzylinder 16 und 17 aktiviert, wodurch das Scheren-Gestänge 11 auseinandergezogen wird und somit auch der gegenseitige Abstand der Tubengreifer 14 vergrößert wird, wie es in Fig. 4 dargestellt ist. In diesen Zustand, in dem der ausgefahrene Kolben jedes Pneumatik-Zylinders neben dem Zylinder des jeweils anderen Pneumatik-Zylinders angeordnet ist, können die Tuben T in die Tubenhalter der Tubenfüllmaschine eingesetzt werden. Während die Tuben-Handhabungsvorrichtung zu dem Tuben-Vorrat zurückkehrt, wird das Scheren-Gestänge 11 wieder zusammengeschoben, so dass die Tubengreifer 14 wieder die in den Fig. 1 bis 3 dargestellte Relativposition einnehmen.

## Patentansprüche

1. Tuben-Handhabungsvorrichtung zum Einsetzen von Tuben in eine Tubenfüllmaschine, zum Umsetzen von Tuben innerhalb der Tubenfüllmaschine und/oder zum Entnehmen von Tuben aus der Tubenfüllmaschine, mit zumindest einem bewegbaren Träger (13), an dem eine Vielzahl von Tubengreifern (14) in zumindest einer Greiferreihe angeordnet sind, wobei an dem Träger (13) eine Verstellvorrichtung (15) angeordnet ist, die zumindest eine Antriebsvorrichtung (16, 17) aufweist, deren Antriebsbewegung mittels einer Übertragungsvorrichtung (18) in eine Relativbewegung der Tubengreifer (14) längs der Greiferreihe umsetzbar ist, wobei die Tubengreifer (14) mittels der Verstellvorrichtung (15) zwischen einer ersten Relativstellung, in der sie einen ersten vorbestimmten gegenseitigen Abstand aufweisen, und zumindest einer zweiten Relativstellung verstellbar sind, in der sie einen zweiten vorbestimmten gegenseitigen Abstand aufweisen, **dadurch gekennzeichnet, dass** die Übertragungsvorrichtung (18) von einem Scheren-Gestänge (11) gebildet ist, das mittels der Antriebsvorrichtung (16, 17) auseinanderziehbar und zusammenschiebbar ist, und dass die Antriebsvorrichtung von zwei Pneumatik-Zylindern (16, 17) gebildet ist, die in Längsrichtung der Greiferreihe parallel zueinander ausgerichtet und in entgegengesetzten Richtungen wirksam sind.

2. Tuben-Handhabungsvorrichtung nach Anspruch 1, **dadurch gekennzeichnet, dass** das Scheren-Gestänge (11) im Wesentlichen in Längsrichtung des Trägers (13) verläuft und dass die Tubengreifer (14) jeweils in einem unteren Gelenkpunkt (25) des Scheren-Gestänges (11) angeordnet sind.

3. Tuben-Handhabungsvorrichtung nach Anspruch 1 oder 2, **dadurch gekennzeichnet, dass** die Pneumatik-Zylinder (16, 17) jeweils etwa im 1/4-Punkt der Länge des Scheren Gestänges (11) an diesem angreifen.

4. Tuben-Handhabungsvorrichtung nach einem der Ansprüche 1 bis 3, **dadurch gekennzeichnet, dass** die Pneumatik-Zylinder (16, 17) in ihren Bewegungen miteinander synchronisiert sind.

## Claims

1. Tube handling device for inserting tubes into a tube filling machine, for relocating tubes within the tube filling machine and/or for removing tubes from the tube filling machine, with at least one movable carrier (13) having a plurality of tube grippers (14) disposed thereon in at least one gripper row, wherein an adjusting device (15) is disposed on the carrier (13), which comprises at least one drive device (16, 17) whose drive motion can be translated by a transfer device (18) into a relative motion of the tube grippers (14) along the gripper row, wherein the tube grippers (14) can be adjusted by the adjusting device (15) between a first relative position in which they have a first predetermined mutual distance, and at least one second relative position in which they have a second predetermined mutual distance, **characterized in that** the transfer device (18) is formed by scissor action arms (11) which can be pulled apart and pushed together using the drive device (16, 17), the drive device being formed by two pneumatic cylinders (16, 17) which are oriented parallel to each other in the longitudinal direction of the gripper row and which act in opposite directions.

2. Tube handling device according to claim 1, **characterized in that** the scissor action arms (11) substantially extend in the longitudinal direction of the carrier (13) and the tube grippers (14) are each disposed in a lower hinge point (25) of the scissor action arms (11).

3. Tube handling device according to claim 1 or 2, **characterized in that** the pneumatic cylinders (16, 17) engage the scissor action arms (11) at approximately 1/4 of their length.

4. Tube handling device according to any one of the claims 1 through 3, **characterized in that** the motion of the pneumatic cylinders (16, 17) is synchronized.

## Revendications

1. Dispositif de manipulation de tubes pour insérer des tubes dans une machine de remplissage de tubes, pour déplacer des tubes dans la machine de remplissage de tubes et/ou retirer des tubes de la machine de remplissage de tubes, comprenant au moins un support mobile (13), sur lequel sont disposés une pluralité d'organes de préhension de tubes (14) dans au moins une rangée d'organes de préhension, support (13) sur lequel est disposé un dispositif de réglage (15) présentant au moins un dispositif d'entraînement (16,17) dont le mouvement d'entraînement peut être converti en un mouvement relatif des organes de préhension de tubes (14) le long de la rangée d'organes de préhension par un dispositif de transfert (18), organes de préhension de tubes (14) qui peuvent être réglés au moyen du dispositif de réglage entre une première position relative, dans laquelle ils sont espacés les uns des autres d'une première distance prédéfinie, et au moins une deuxième position relative, dans laquelle ils sont espacés les uns des autres d'une deuxième distance prédéfinie, **caractérisé en ce que** le dispositif de transfert (18) est constitué par un ensemble articulé du type en ciseaux (11), pouvant être ouvert et fermé par le dispositif d'entraînement (16, 17), et **en ce que** le dispositif d'entraînement est constitué par deux vérins pneumatiques (16, 17) disposés parallèles entre eux dans le sens longitudinal de la rangée d'organes de préhension et agissant en directions contraires.

2. Dispositif de manipulation de tubes selon la revendication 1, **caractérisé en ce que** l'ensemble articulé du type en ciseaux (11) s'étend sensiblement dans le sens longitudinal du support (13) et **en ce que** les organes de préhension de tubes (14) sont disposés chacun dans un point d'articulation inférieur (25) de l'ensemble articulé du type en ciseaux (11).

3. Dispositif de manipulation de tubes selon la revendication 1 ou 2, **caractérisé en ce que** les vérins pneumatiques (16, 17) viennent en prise chacun avec l'ensemble articulé du type en ciseaux (11) au point situé à environ 1/4 de la longueur de celui-ci.

4. Dispositif de manipulation de tubes selon l'une quelconque des revendications 1 à 3, **caractérisé en ce que** les mouvements des vérins pneumatiques (16, 17) sont synchronisés entre eux.
